# EUROPEAN PATENT SPECIFICATION

(11) **EP 3 751 110 B1**
(45) Date of publication and mention of the grant of the patent: **12.02.2025**
(21) Application number: 19751880.6
(22) Date of filing: 08.02.2019
(51) Int. Cl.: F02B 75/32, F02B 41/04

(54) **COMBUSTION ENGINE**
VERBRENNUNGSMOTOR
MOTEUR À EXPLOSION

(30) Priority: 09.02.2018 ES 201830114
(43) Date of publication of application: 16.12.2020
(73) Proprietor: Brizuela Fernández, Fernando, 48903 Barakaldo - Bizkaia (ES)
(72) Inventor: Brizuela Fernández, Fernando, 48903 Barakaldo - Bizkaia (ES)
(74) Representative: Del Valle Valiente, Sonia
(86) International application number: PCT/ES2019/070068
(87) International publication number: WO 2019/155108

(56) References cited:
- DE-A1- 3 222 568
- FR-A- 833 509
- US-A- 1 379 115
- US-A- 1 379 115
- US-A- 2 074 581
- US-A- 2 368 412
- US-A- 3 034 362
- US-A- 4 567 866
- US-A- 4 567 866
- US-A- 4 974 554
- US-A- 5 816 201
- US-A1- 2014 096 740

## Description

### OBJECT OF THE INVENTION

The present invention relates to a combustion engine that has greater output than current combustion engines.

### BACKGROUND OF THE INVENTION

Combustion engines comprise one or more hollow cylinders in an engine block, and inside each one a piston travels in a reciprocating linear motion and, depending on the type of fuel and/or engine cycles, travels between a top dead centre (TDC) and a bottom dead centre (BDC), and wherein the piston is driven by the combustion of a mixture of air and fuel that is synchronised with the point when the piston approximately reaches the top dead centre. Given that the upper end of the cylinder is closed, it configures a closed combustion chamber wherein the expansive wave pushes the piston towards the outside of the cylinder; coupling a foot of a piston rod with said piston through a bolt, and coupling the head at the opposite end of the piston rod to the crankshaft, thereby obtaining an engine torque in the shaft of said crankshaft.

As previously mentioned, the aim is to synchronise the combustion with the point at which the piston reaches the top dead centre in the cylinder, since at that moment the compression of the mixture is greatest, the size of the combustion chamber is smallest, and the greatest output is obtained from the expansive wave. Moreover, this configuration has a drawback in that at the top dead centre, the piston rod is arranged perpendicular to the axis of the crankshaft, and the effective thrust results from the inertia of the motion the already had by the crankshaft and from the thrust of the piston rod driven by the piston, such that if the crankshaft were not in motion, it would bend or break the piston rod, since the thrust of the same would be exerted perpendicularly to the axis of the crankshaft. This configuration further implies that the torque applied to the crankshaft by the piston rod is less efficient due to the perpendicular nature of the piston rod to the axis of the crankshaft at the top dead centre, which is when the combustion is most explosive.

To minimise this negative effect, engine manufacturers, who aim to maximise the power of the mixture, try to make the explosion happen close to the TDC, in the attempt to find a compromise wherein the reduced efficiency, due to the fact that the mixture is not exploded at the TDC, is compensated by the increase in the torque applied to the crankshaft given that the piston rod has a more favourable position, but there is always a loss for one reason or another.

Furthermore, in order to maintain the piston in a substantially vertical position throughout the entire reciprocating motion, it is provided with piston skirts that are often the same height or higher than the diameter of the same. Said skirts increase the weight of the engine and engine inertia and increase the irregular wear of the cylinder due to a reciprocating motion that causes the lower edges thereof to rub against the inner walls of the cylinder with a certain torque or moment, due to the distance of said edges to the bolt that couples the piston to the piston rod.

Document US4567866A discloses an internal combustion engine with extended power stroke and shortened compression stroke has an improved efficiency over internal combustion engines having strokes of equal length.

### DESCRIPTION OF THE INVENTION

The combustion engine of the invention has a configuration that solves the aforementioned drawbacks, thereby obtaining a greater output.

The engine of the invention is of the type that comprises at least one hollow cylinder, inside of which a piston travels in a linear reciprocating motion, coupled by means of a piston rod to a crankshaft, wherein the piston rod comprises:
- a first hub arranged in its head for coupling with the crankshaft,
- a second hub arranged in its foot, and which is substantially aligned with or parallel to the first hub in the longitudinal direction of the cylinder when the crankshaft is in the upper or lower position, and
- a third hub also arranged in the foot of the piston rod, which is offset laterally towards the front with respect to the second hub in the advance direction of the crankshaft;
- the piston being coupled with the third hub to reach the top dead centre TDC when the piston rod is advanced in the direction of rotation of the crankshaft (in other words, in the projection, its head has already gone from the axis of the cylinder to in front of the axis of the crankshaft),
- comprising a guide to guide the travel of the piston rod through the cylinder coupled with the second hub, and
- the piston being coupled with the third hub via a link rod in order to enable clearance between the piston and the guide during the reciprocating motion.

In this manner, the top dead centre of the piston is reached when the head of the piston rod is no longer perpendicular to the axis of the crankshaft, but rather advanced a certain angle in projection with respect to the same, which generates a greater torque on the shaft of the crankshaft at the moment of combustion in said top dead centre, harnessing a greater thermodynamic power. Furthermore, the following advantages have been found in the prototypes developed:
- reduction of piston weight,
- reduction of consumption, by increasing output,
- reduction of engine displacement needed to reach one same power of the shaft of the crankshaft.

Moreover, the tests performed have unexpectedly found a drastic reduction of CO and CO2 emissions, beyond what was expected by a lower consumption of fuel by increasing output, surely due to the fact that greater temperatures are reached in the combustion by taking place at the optimum moment (the TDC), with an apparent improved combustion, which could possibly reduce the requirements of current vehicles with regard to the filtering of exhaust gases (which often require the implementation of post combustion valves, filters, catalysts or additives), or at least improve the ecological efficiency of the engine.

It must be mentioned that the configuration of the engine of the invention is valid for any type of engine (diesel or gasoline).

### BRIEF DESCRIPTION OF THE DRAWINGS

- Figure 1 shows a perspective view of the piston rod of a cylinder of the engine of the invention.
- Figure 2 shows a perspective view of the piston of a cylinder of the engine of the invention.
- Figure 3 shows a perspective view of the link rod of a cylinder of the engine of the invention.
- Figure 4 shows a perspective view of the guide of a cylinder of the engine of the invention and of the additional bolt by means of which it is fastened to the second hub.

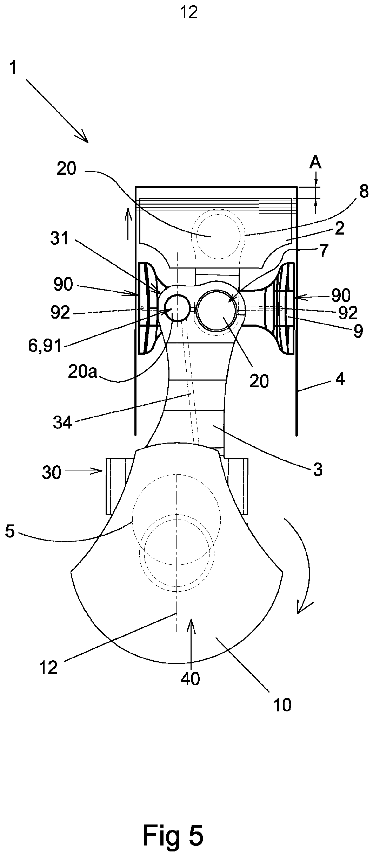

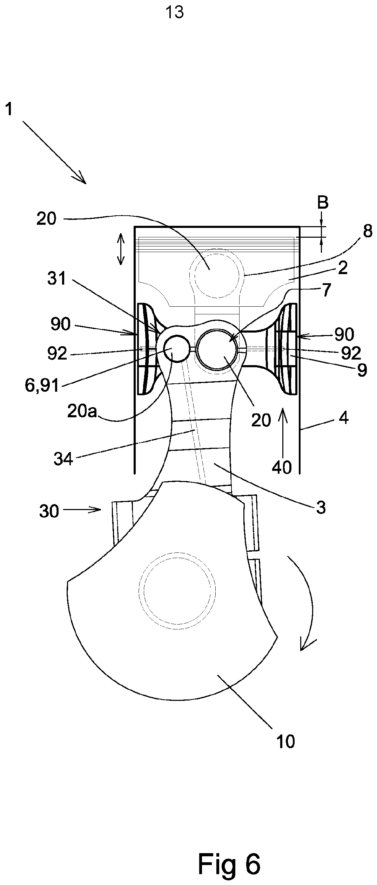

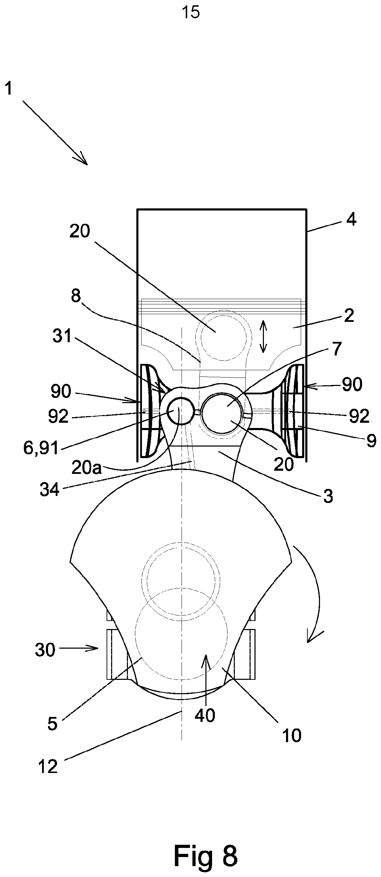

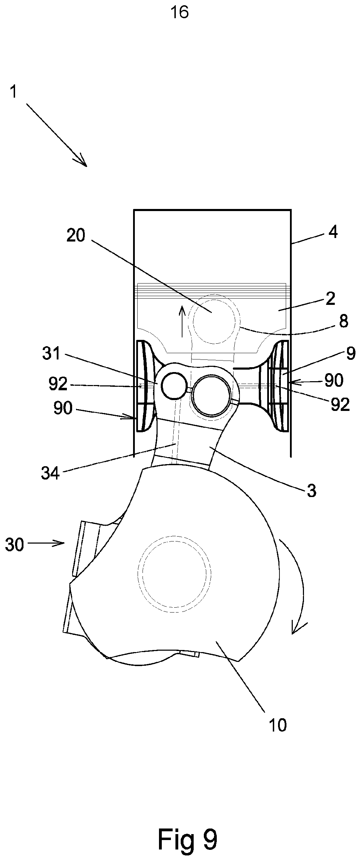

- Figures 5 to 9 show a cross section of a mounted engine cylinder of the invention in different positions of its operating cycle; specifically, figure 5 shows the position wherein the crankshaft is at the highest position, but wherein the piston has not yet reached the top dead centre; figure 6 shows the position corresponding to the bottom dead centre, wherein the crankshaft is advanced, and therefore the head of the piston rod at the moment of the combustion at the top dead centre is advanced with respect to the axis of the crankshaft, and figure 8 shows the piston passing through the bottom dead centre. Said figures do not show the valves or spark plugs in order to simplify the figures.

### DESCRIPTION OF A PREFERRED EMBODIMENT OF THE INVENTION

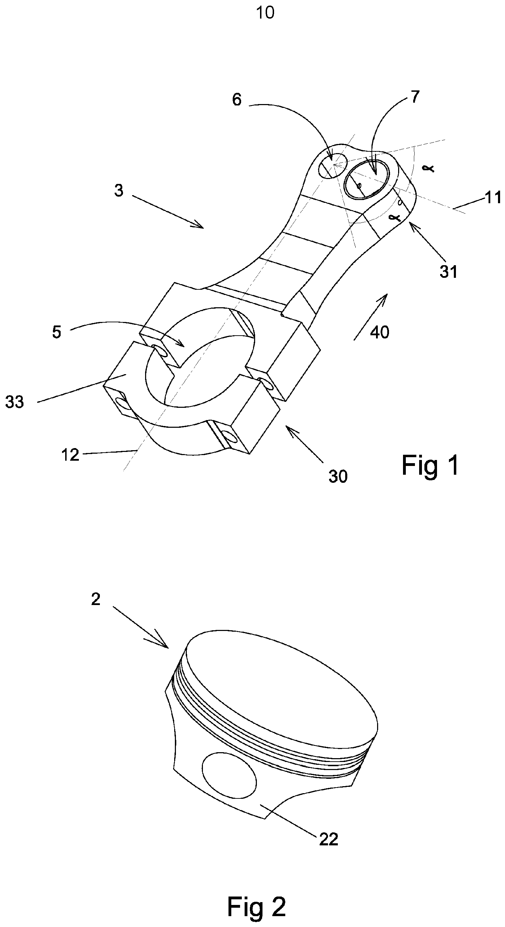

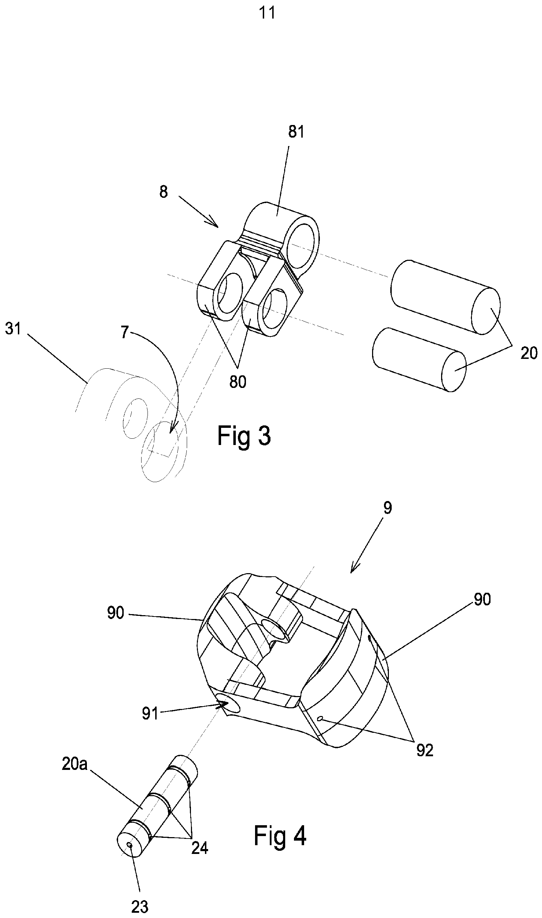

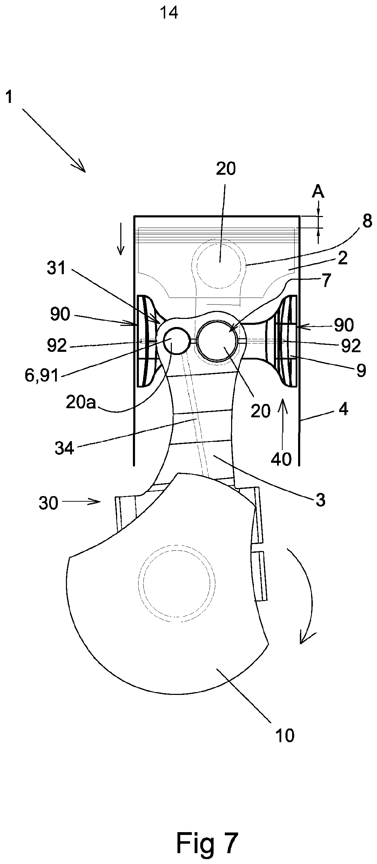

The combustion engine (1) (see figures 5 to 9 ) of the invention is of the type that comprises at least one hollow cylinder (4) through which a piston (2) travels (also see fig. 2 ) in a linear reciprocating motion, coupled by means of a piston rod (3) (also see fig 1 ) to a crankshaft (10), wherein according to the invention, the piston rod (3) comprises (see fig. 1):
- a first hub (5) arranged in its head (30) for coupling with the crankshaft (10),
- a second hub (6) arranged in its foot (31), and which is substantially aligned or parallel to the first hub (5) in the longitudinal direction (40) of the cylinder (4) when the crankshaft (10) is in the upper or lower position (see figs. 5 and 8 , respectively), and
- a third hub (7) also arranged in the foot (31) of the piston rod (3), which is offset laterally towards the front with respect to the second hub (6) in the advance direction of the crankshaft (10);
- the piston (2) being coupled with the third hub (7) to reach the top dead centre (TDC) when the piston rod (3) is advanced in the direction of rotation of the crankshaft (10), as shown in fig. 6 , wherein the height B is less than the height A, which is the height the piston (2) reaches when the crankshaft is in the upper position (see fig 5 ), and which is also reached when the piston (2) is moving downwards again, as seen in figure 7 ;
- comprising a guide (9) (also see fig 4 ) to guide the travel of the piston rod (3) through the cylinder (4) coupled with the second hub (6), and
- the piston (2) being coupled with the third hub (7) via a link rod (8) (also see fig 3 ) in order to enable a clearance between the piston (2) and the guide (9) during the reciprocating motion.

More preferably, the link rod (8) is in the shape of a fork, the side branches (80) of which are coupled to the third hub (7) of the piston rod (3), the central branch (81) of which is coupled with the piston (2) through the corresponding bolts (20), since in this manner the piston rod (8) can continue to have an essentially flat configuration and the piston (2) can have its traditional shape in order to enable the coupling thereof by means of the bolt (20), although with shorter skirts (22).

In turn, the guide (9) ideally comprises a body with the general shape of a crown to enable the piston rod (3) to pass through the inside thereof and further surround the walls of the cylinder (4), having at least two curved faces (90) (see fig. 4) making contact with the walls of the cylinder (4) (which will then be facing one another, as seen in the figures), comprising a fourth hub (91) for coupling with the second hub (6) through an additional bolt (20a). This configuration with two curved faces (90) minimises the contact surfaces with the cylinder (4) as much as possible while maintaining the guide.

To achieve a good lubrication of the curved faces (90) in contact with the walls of the cylinder (4), the invention envisages that the guide (9) preferably comprises oilers (92) to supply oil to said curved faces (90). These oilers (92) are ideally fed by means of a duct (34) that is made through the inside of the piston rod (3) through which pressurised oil runs and flows out at the second hub (6), to which said oilers (92) have access, the additional bolt (20a) in this case comprising an internal duct (23) with accesses (24) facing the duct (34) and oilers (92) to channel the oil to the same.

For optimal operation, wherein the advance of the piston rod has the most favourable angle when the piston (2) is at the top dead centre, the third hub (7) must be arranged (see fig. 1 ) in an area comprised in an angle from +60 degrees to -60 degrees with respect to a direction (11) that passes through the centre of the second hub (6) perpendicularly to the imaginary line (12) that joins the centre of the first hub (5) of the head (30) of the piston rod (3) and the centre of the second hub (6) of the foot (31) of the piston rod (3). The best results have been achieved when said area is comprised between +45 degrees and -45 degrees.

Lastly, it must be mentioned that, ideally, the head (30) of the piston rod (3) comprises a detachable section (33) in order to be able to detachably fasten it to the crankshaft (10).

Having sufficiently described the nature of the invention, in addition to the manner of applying it in practice, it must hereby be stated that the aforementioned arrangements indicated and represented in the attached drawings are susceptible to modifications with regard to the detail provided that they do not alter the fundamental principle of the invention.

## Claims

1. A combustion engine (1) comprising a crankshaft (10) and at least one cylinder assembly, each cylinder assembly comprising:
- a hollow cylinder (4),
- a piston (2) positioned in the cylinder (4) and able to travel in the cylinder (4) in a linear reciprocating motion,
- a guide unit (9) positioned in the cylinder (4) between the piston (2) and the crankshaft (10) and able to travel in the cylinder (4) in a reciprocating motion,
- a piston rod (3) coupled to the crankshaft (10), as well as to the guide unit (9) and via a link rod (8) coupled to the piston (2),
wherein the piston rod (3) has
- a first hub (5) arranged in its head (30) for coupling with the crankshaft (10),
- a second hub (6) arranged in its foot (31) for coupling with the guide unit (9), and
- a third hub (7) arranged in its foot (31) for coupling with the link rod (8) which is coupled to the piston (2),
**characterised in that** the cylinder assembly is arranged so that:
- the second hub (6) of the piston rod (3) is connected to the guide unit (9) at a position which is offset from the centre line of the cylinder (4) a certain distance,
- the crankshaft (10) is positioned offset from the centre line of the cylinder (4) at a distance which corresponds to the distance which the second hub (6) is offset from the centre line of the cylinder (4), such that when the crankshaft reaches its TDC, the first hub (5) and the second hub (6) form an imaginary line parallel to the centre line of the cylinder (4)
- the link rod (8) is connected to the piston (2) and to the third hub (7) substantially in the centre line of the cylinder (4) so that the link rod (8) is substantially aligned with the centre line of the cylinder (4) thus creating a geometry avoiding lateral forces on the piston (2).

2. The combustion engine (1) according to claim 1, wherein the link rod (8) is in the shape of a fork, the side branches (80) of which are coupled to the third hub (7) of the piston rod (3), the central branch (81) of which is coupled with the piston (2) through the corresponding bolts (20).

3. The combustion engine (1) according to any of the preceding claims, wherein the guide (9) comprises a body with the general shape of a crown to enable the passage of the piston rod (3), with at least two curved faces (90) making contact with the walls of the cylinder (4), comprising a fourth hub (91) for coupling with the second hub (6) through an additional bolt (20a).

4. The combustion engine (1) according to any of the preceding claims, wherein the guide (9) comprises oilers (92) to supply oil to the curved faces (90).

5. The combustion engine (1) according to claim 4 wherein the oilers (92) are fed by means of a duct (34) that is made through the inside of the piston rod (3) through which pressurised oil runs and flows out at the second hub (6), to which said oilers (92) have access; the additional bolt (20a) comprising an internal duct (23) with accesses (24) facing the duct (34) and oilers (92) to channel the oil to the same.

6. The combustion engine (1) according to any of the preceding claims, wherein the head (30) of the piston rod (3) comprises a detachable section (33) in order to be able to detachably fasten it to the crankshaft (10).

## Patentansprüche

1. Verbrennungsmotor (1), der eine Kurbelwelle (10) und mindestens eine Zylinderbaugruppe umfasst, wobei jede Zylinderbaugruppe Folgendes umfasst:
- einen Hohlzylinder (4),
- einen Kolben (2), der sich in dem Zylinder (4) befindet und sich in dem Zylinder (4) in einer linearen Hin- und Herbewegung bewegen kann,
- eine Führungseinheit (9), die sich in dem Zylinder (4) zwischen dem Kolben (2) und der Kurbelwelle (10) befindet und sich in dem Zylinder (4) in einer Hin- und Herbewegung bewegen kann,
- eine Kolbenstange (3), die mit der Kurbelwelle (10) sowie mit der Führungseinheit (9) und über eine mit dem Kolben (2) gekoppelte Verbindungsstange (8) gekoppelt ist,
wobei die Kolbenstange (3) Folgendes aufweist
- eine in ihrem Kopf (30) angeordnete erste Nabe (5) zur Kopplung mit der Kurbelwelle (10),
- eine in ihrem Fuß (31) angeordnete zweite Nabe (6) zur Kopplung mit der Führungseinheit (9), und
- eine in ihrem Fuß (31) angeordnete dritte Nabe (7) zur Kopplung mit der mit dem Kolben (2) gekoppelten Verbindungsstange (8),
**dadurch gekennzeichnet, dass** die Zylinderbaugruppe so angeordnet ist, dass:
- die zweite Nabe (6) der Kolbenstange (3) mit der Führungseinheit (9) an einer Stelle verbunden ist, die von der Mittellinie des Zylinders (4) um einen bestimmten Abstand versetzt ist,
- sich die Kurbelwelle (10) versetzt von der Mittellinie des Zylinders (4) in einem Abstand befindet, der dem Abstand entspricht, um den die zweite Nabe (6) von der Mittellinie des Zylinders (4) versetzt ist, sodass, wenn die Kurbelwelle ihren OT erreicht, die erste Nabe (5) und die zweite Nabe (6) eine gedachte Linie parallel zur Mittellinie des Zylinders (4) bilden
- die Verbindungsstange (8) mit dem Kolben (2) und der dritten Nabe (7) im Wesentlichen in der Mittellinie des Zylinders (4) verbunden ist, sodass die Verbindungsstange (8) im Wesentlichen mit der Mittellinie des Zylinders (4) ausgerichtet ist, wodurch eine Geometrie geschaffen wird, die Seitenkräfte auf den Kolben (2) vermeidet.

2. Verbrennungsmotor (1) nach Anspruch 1, wobei die Verbindungsstange (8) die Form einer Gabel hat, deren seitliche Zweige (80) mit der dritten Nabe (7) der Kolbenstange (3) gekoppelt sind und deren mittlerer Zweig (81) über die entsprechenden Bolzen (20) mit dem Kolben (2) gekoppelt ist.

3. Verbrennungsmotor (1) nach einem der vorhergehenden Ansprüche, wobei die Führung (9) einen Körper mit der allgemeinen Form einer Krone umfasst, um den Durchgang der Kolbenstange (3) zu ermöglichen, mit mindestens zwei gekrümmten Flächen (90), die mit den Wänden des Zylinders (4) in Kontakt stehen, umfassend eine vierte Nabe (91) zur Kopplung mit der zweiten Nabe (6) über einen zusätzlichen Bolzen (20a).

4. Verbrennungsmotor (1) nach einem der vorhergehenden Ansprüche, wobei die Führung (9) Öler (92) umfasst, um die gekrümmten Flächen (90) mit Öl zu versorgen.

5. Verbrennungsmotor (1) nach Anspruch 4, wobei die Öler (92) mittels eines Kanals (34) gespeist werden, der durch das Innere der Kolbenstange (3) hindurch ausgeführt ist, durch den unter Druck stehendes Öl läuft und an der zweiten Nabe (6) ausströmt, zu der die Öler (92) Zugang haben; wobei der zusätzliche Bolzen (20a) einen inneren Kanal (23) mit Zugängen (24) umfasst, die dem Kanal (34) und den Ölern (92) gegenüberliegen, um das Öl zu diesen zu leiten.

6. Verbrennungsmotor (1) nach einem der vorhergehenden Ansprüche, wobei der Kopf (30) der Kolbenstange (3) einen abnehmbaren Abschnitt (33) umfasst, um ihn abnehmbar an der Kurbelwelle (10) befestigen zu können.

## Revendications

1. Moteur à combustion (1) comprenant un vilebrequin (10) et au moins un groupe cylindres, chaque groupe cylindres comprenant :
- un cylindre creux (4),
- un piston (2) positionné dans le cylindre (4) et apte à se déplacer dans le cylindre (4) dans un mouvement de va-et-vient linéaire,
- une unité de guidage (9) positionnée dans le cylindre (4) entre le piston (2) et le vilebrequin (10) et apte à se déplacer dans le cylindre (4) dans un mouvement de va-et-vient,
- une tige de piston (3) accouplée au vilebrequin (10), ainsi qu'à l'unité de guidage (9) et par l'intermédiaire d'une tige de liaison (8) accouplée au piston (2),
dans lequel la tige de piston (3) a
- un premier moyeu (5) agencé dans sa tête (30) pour accouplement avec le vilebrequin (10),
- un deuxième moyeu (6) agencé dans son pied (31) pour accouplement avec l'unité de guidage (9), et
- un troisième moyeu (7) agencé dans son pied (31) pour accouplement avec la tige de liaison (8) qui est accouplée au piston (2),
**caractérisé en ce que** le groupe cylindres est agencé de sorte que :
- le deuxième moyeu (6) de la tige de piston (3) est relié à l'unité de guidage (9) au niveau d'une position qui est décalée de la ligne centrale du cylindre (4) d'une certaine distance,
- le vilebrequin (10) est positionné décalé de la ligne centrale du cylindre (4) à une distance qui correspond à la distance selon laquelle le deuxième moyeu (6) est décalé de la ligne centrale du cylindre (4), de telle sorte que lorsque le vilebrequin atteint son PMH, le premier moyeu (5) et le deuxième moyeu (6) forment une ligne imaginaire parallèle à la ligne centrale du cylindre (4)
- la tige de liaison (8) est reliée au piston (2) et au troisième moyeu (7) sensiblement dans la ligne centrale du cylindre (4) de sorte que la tige de liaison (8) est sensiblement alignée avec la ligne centrale du cylindre (4), créant ainsi une géométrie évitant les forces latérales sur le piston (2).

2. Moteur à combustion (1) selon la revendication 1, dans lequel la tige de liaison (8) est sous la forme d'une fourche, dont les branches latérales (80) sont accouplées au troisième moyeu (7) de la tige de piston (3), dont la branche centrale (81) est accouplée au piston (2) par le biais des boulons (20) correspondants.

3. Moteur à combustion (1) selon l'une quelconque des revendications précédentes, dans lequel le guide (9) comprend un corps avec la forme générale d'une couronne pour permettre le passage de la tige de piston (3), avec au moins deux faces incurvées (90) en contact avec les parois du cylindre (4), comprenant un quatrième moyeu (91) pour accouplement avec le deuxième moyeu (6) par le biais d'un boulon (20a) supplémentaire.

4. Moteur à combustion (1) selon l'une quelconque des revendications précédentes, dans lequel le guide (9) comprend des graisseurs (92) pour fournir de l'huile aux faces incurvées (90).

5. Moteur à combustion (1) selon la revendication 4, dans lequel les graisseurs (92) sont alimentés au moyen d'un conduit (34) qui est réalisé à travers l'intérieur de la tige de piston (3) et à travers lequel l'huile sous pression s'écoule et sort au niveau du deuxième moyeu (6), auquel lesdits graisseurs (92) ont accès ; le boulon (20a) supplémentaire comprenant un conduit interne (23) avec des accès (24) faisant face vers le conduit (34) et des graisseurs (92) pour canaliser l'huile vers ceux-ci.

6. Moteur à combustion (1) selon l'une quelconque des revendications précédentes, dans lequel la tête (30) de la tige de piston (3) comprend une section détachable (33) afin de pouvoir la fixer de manière détachable au vilebrequin (10).
